# EUROPEAN PATENT APPLICATION

(11) **EP 4 485 749 A1**
(43) Date of publication of application: **01.01.2025**
(21) Application number: 23759526.9
(22) Date of filing: 18.01.2023
(51) Int. Cl.: H02J 7/02, H02J 7/00, H02J 13/00

(54) **CHARGING SYSTEM AND CONTROL DEVICE FOR CHARGING SYSTEM**

(30) Priority: 22.02.2022 JP 2022025737
(71) Applicant: Hitachi, Ltd., Tokyo 100-8280 (JP)
(72) Inventor: SHIMADA, Takae, Tokyo 100-8280 (JP); FURUKAWA, Kimihisa, Tokyo 100-8280 (JP); MABUCHI, Yuuichi, Tokyo 100-8280 (JP); KAMIZUMA, Hiroshi, Tokyo 100-8280 (JP); KAWAGUCHI, Yuki, Tokyo 100-8280 (JP)
(74) Representative: Mewburn Ellis LLP
(86) International application number: PCT/JP2023/001345
(87) International publication number: WO 2023/162520

(57) **Abstract**

Provided is a charging system that can appropriately assign a power conversion unit to an apparatus to be charged. For this purpose, a unit assignment section (54) is configured to, when a new apparatus to be charged (42-k) is connected to any (40-k) of charging ports, reduce the number of assigned units (Nm) preferentially for one, from among apparatuses to be charged (42-m) for which the number of assigned units (Nm) is plural, that involves a smaller reduction in charging power when the number of assigned units (Nm) is reduced, and to assign the power conversion section (22) in a vacant state resulting from the reduction to the newly connected device to be charged (42-k).

## Description

### Technical Field

The present invention relates to a charging system and a charging system control device.

### Background Art

As a background art in the present technical field, claim 1 in PTL 1 below describes "A charging device for charging a storage battery mounted on an electric vehicle, the charging device comprising: a plurality of DC power supply sections configured to perform current control and concurrent operation; a plurality of power transmission means, connected to a vehicle, for supplying a current; operation means for performing an operation of starting and stopping charging for each vehicle; a matrix switcher configured to assign a plurality of output electrical circuits of the DC power supply section to arbitrary electrical circuits of the plurality of power transmission means; current control means for individually controlling magnitude of an output current from the DC power supply section; and switch control means for controlling the matrix switcher, wherein the switch control means controls the matrix switcher such that the one DC power supply section is not connected to two or more electrical circuits of the power transmission means, and the current control means performs control to concurrently operate the DC power supply sections assigned by the switch control means to use a total output current as a current necessary for charging a storage battery of the vehicle.".

### Citation List

### Patent Literature

PTL 1: JP 2011-239559 A

### Summary of Invention

### Technical Problem

In the above-described technology, it is preferable that a power conversion unit (DC power supply section) is appropriately assigned to the apparatus to be charged.

The present invention has been made in view of the above circumstances and has an object to provide a charging system and a charging system control device in which a power conversion unit is appropriately assigned to an apparatus to be charged.

### Solution to Problem

In order to solve the above problem, a charging system according to the present invention includes a plurality of power conversion units, a plurality of charging ports that respectively supply power to a plurality of apparatuses to be charged, a switch section that switches a connection relationship between the plurality of power conversion units and the plurality of charging ports, a unit assignment section that assigns the power conversion units to each of the apparatuses to be charged by the number of assigned units which is one or plural, and a switching control section that sets a connection relationship in the switch section according to an assignment result by the unit assignment section, wherein a unit assignment section is configured to, when the new apparatus to be charged is connected to any of charging ports, reduce the number of assigned units preferentially for one, from among apparatuses to be charged for which the number of assigned units is plural, that involves a smaller reduction in charging power when the number of assigned units is reduced, and to assign the power conversion unit in a vacant state resulting from the reduction to the newly connected apparatus to be charged.

### Advantageous Effects of Invention

According to the present invention, a power conversion unit is appropriately assigned to an apparatus to be charged.

### Brief Description of Drawings

[FIG. 1] FIG. 1 is a block diagram of a charging system according to the first embodiment.
[FIG. 2] FIG. 2 is a block diagram of a cell converter unit.
[FIG. 3] FIG. 3 is a block diagram of a computer.
[FIG. 4] FIG. 4 is a schematic diagram illustrating an example of a parking lot in which a power conversion device is installed.
[FIG. 5] FIG. 5 is a flowchart of a unit assignment routine.

### Description of Embodiments

### [First Embodiment]

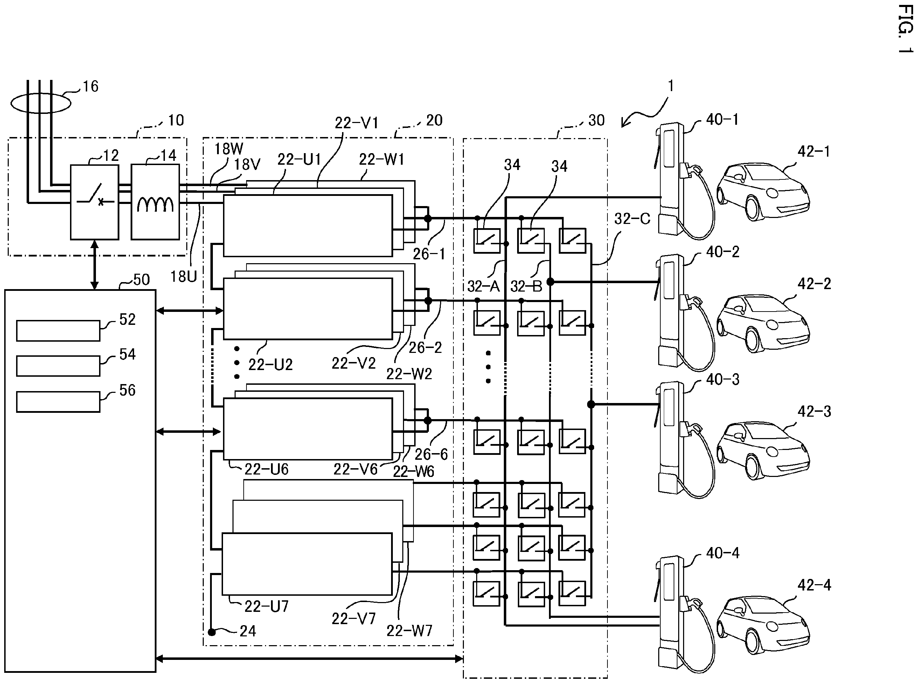

FIG. 1 is a block diagram of a charging system 1 according to the first embodiment.

Referring to FIG. 1, the charging system 1 includes a high-voltage input section 10, a power conversion section 20, a matrix switch section 30 (switch section), four charging ports 40-1 to 40-4, and a control device 50 (charging system control device).

The charging ports 40-1 to 40-4 are connected to, for example, vehicles 42-1 to 42-4 (apparatuses to be charged) which are electric vehicles. In the following description, a plurality of components, information, and the like having the same or similar functions and meanings may be denoted by attaching "-" and alphanumeric characters to the same reference numerals like "the charging ports 40-1 to 40-4". However, in a case where it is not necessary to distinguish the plurality of constituent elements and the like, for example, as in "charging port 40", "-" and alphanumeric characters may be omitted.

The high-voltage input section 10 receives power from, for example, a three-phase 6.6 kV AC system 16 (AC power supply) and outputs a three-phase 6.6 kV AC voltage to the U-phase, V-phase, and W-phase lines 18U, 18 V, and 18 W via a switch 12 and a reactor 14. The power conversion section 20 includes a total of 21 cell converter units 22 (power conversion units). The AC terminals (the left side in FIG. 1) of seven cell converter units 22-U1 to 22-U7 are connected in series between the line 18U and a neutral point 24.

Similarly, AC terminals of seven cell converter units 22-V1 to 22-V7 are connected in series between the line 18V and the neutral point 24, and AC terminals of seven cell converter units 22-W1 to 22-W7 are connected in series between the line 18W and the neutral point 24. The DC terminals (the right side in FIG. 1) of the cell converter units 22-U1, 22-V1, and 22-W1 are connected in parallel to a line 26-1. Similarly, the DC terminals of cell converter units 22-Up, 22-Vp, and 22-Wp (where p = 2 to 6) are also connected in parallel to a line 26-p.

The matrix switch section 30 includes three DC buses 32-A, 32-B, and 32-C and a plurality of switches 34. A total of three switches 34, one each, are connected between the line 26-1 and the DC buses 32-A, 32-B, and 32-C, and these switches 34 switch the on/off states of the connection between the line 26-1 and the DC buses 32-A, 32-B, and 32-C.

Similarly, a total of three switches 34, one each, are connected between the line 26-p (where p = 2 to 6) and the DC buses 32-A, 32-B, and 32-C, and these switches 34 switch the on/off states of the connection between the line 26-p and the DC buses 32-A, 32-B, and 32-C. In addition, a total of nine switches 34 are connected between the DC terminals (the right side in FIG. 1) of the cell converter units 22-U7, 22-V7, and 22-W7 and the DC buses 32-A, 32-B, and 32-C. These switches 34 switch the on/off states of the connection between the cell converter units 22-U7, 22-V7, and 22-W7 and the DC buses 32-A, 32-B, and 32-C.

The charging ports 40-1,40-2, and 40-3 are respectively connected to the DC buses 32-A, 32-B, and 32-C. In addition, the charging port 40-4 is connected to both of the DC buses 32-A and 32-B. Each charging port 40 supplies the DC power received from the corresponding DC bus 32 to the vehicle 42 connected to the charging port 40, thereby charging a battery (not shown) provided in the vehicle 42. The control device 50 controls each section of the charging system 1. Note that the details of the control device 50 will be described later.

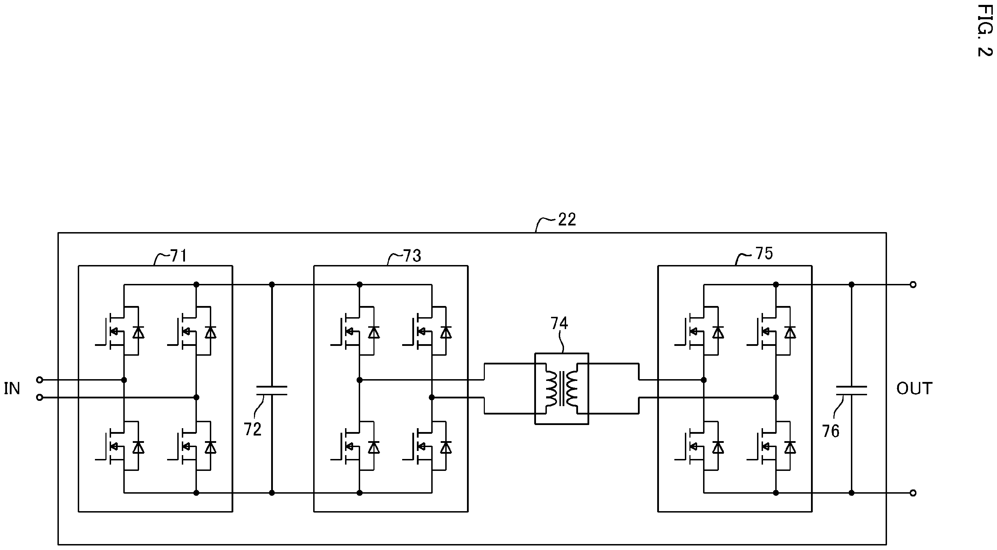

FIG. 2 is a block diagram of the cell converter unit 22.

In FIG. 2, the cell converter unit 22 includes an AC/DC converter 71, a smoothing capacitor 72, a DC/AC converter 73, a radio-frequency transformer 74, an AC/DC converter 75, and a smoothing capacitor 76.

The AC/DC converter 71 converts the single-phase AC voltage of the commercial frequency input from an input terminal IN into a DC voltage and supplies the DC voltage to the DC/AC converter 73 via the smoothing capacitor 72. The DC/AC converter 73 converts the DC voltage into a radio-frequency single-phase AC voltage and supplies the single-phase AC voltage to the AC/DC converter 75 via the radio-frequency transformer 74. Here, the radio frequency is, for example, a frequency of 100 Hz or more, but it is preferable to adopt a frequency of 1 kHz or more, and it is more preferable to adopt a frequency of 10 kHz or more. The AC/DC converter 75 rectifies the radio-frequency single-phase AC voltage and outputs a DC voltage from an output terminal OUT via the smoothing capacitor 76.

Each of the AC/DC converters 71 and 75 and the DC/AC converter 73 includes four switching elements (with no reference numeral) connected in an H bridge shape and a diode (with no reference numeral) connected in anti-parallel to these switching elements. As these switching elements, semiconductor switching elements such as Metal-Oxide-Semiconductor Field-Effect Transistors (MOSFETs) and insulated gate bipolar transistors (IGBTs) can be applied, but other semiconductor switching elements may be applied.

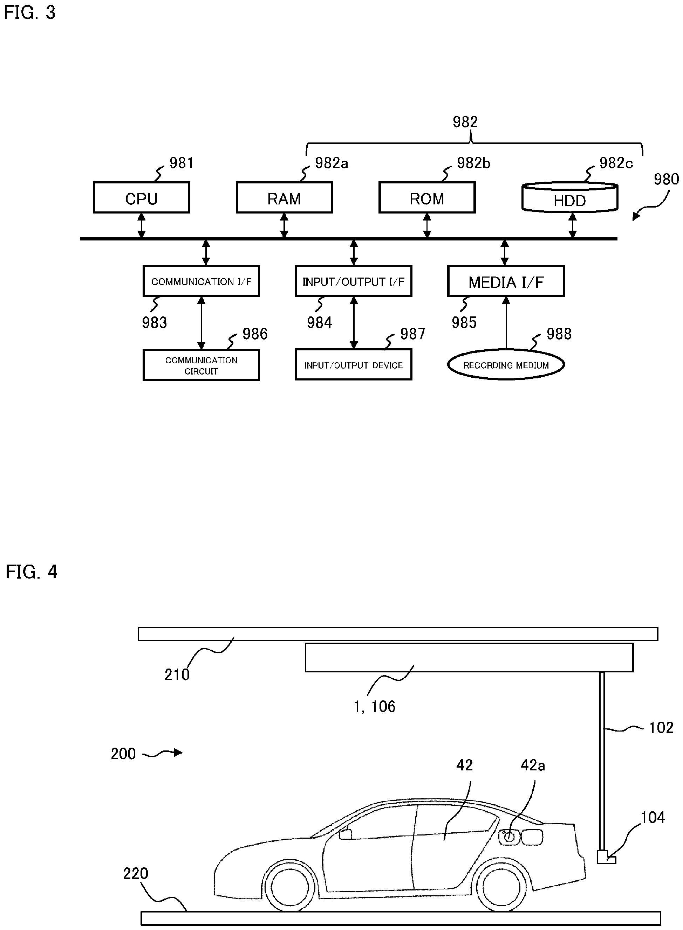

FIG. 3 is a block diagram of a computer 980. The control device 50 illustrated in FIG. 1 includes one or a plurality of computers 980 illustrated in FIG. 3.

Referring to FIG. 3, the computer 980 includes a CPU 981, a storage section 982, a communication interface (I/F) 983, an input/output I/F 984, and a media I/F 985. Here, the storage section 982 includes a RAM 982a, a ROM 982b, and an HDD 982c. The communication I/F 983 is connected to a communication circuit 986. The input/output I/F 984 is connected to an input/output device 987. The media I/F 985 reads and writes data from and in a recording medium 988.

The ROM 982b stores control programs executed by the CPU, various data, and the like. The CPU 981 implements various functions by executing the application programs loaded into the RAM 982a. The inside of the control device 50 illustrated in FIG. 1 illustrates the functions implemented by application programs and the like as blocks. That is, as illustrated in FIG. 1, the control device 50 includes a charging time monitoring section 52, a unit assignment section 54, and a switching control section 56.

The charging time monitoring section 52 monitors charging times T1 to T4 for the respective vehicles 42-1 to 42-4, that is, elapsed times from charging start times. The unit assignment section 54 determines the number of assigned units N1 to N4, which is the number of the cell converter units 22 to be assigned to each of the vehicles 42-1 to 42-4. The switching control section 56 sets the on/off states of the respective switches 34 in the matrix switch section 30 so as to implements the determined number of assigned units N1 to N4.

FIG. 4 is a schematic diagram illustrating an example of a parking lot in which the charging system 1 is installed.

Referring to FIG. 4, a parking lot 200 includes a ceiling 210 and a floor 220. The vehicle 42 described above includes a power receiving connector 42a and is parked on the floor 220 of the parking lot 200. The charging system 1 includes a housing 106 having a substantially flat plate shape along the shape of the ceiling 210 and is attached to the ceiling 210 of the parking lot 200.

A cable 102 is attached to the charging system 1. The cable 102 hangs downward. A power feed connector 104 is attached to the lower end of the cable 102. When the user fits the power feed connector 104 to the power receiving connector 42a and performs a predetermined operation, electric power is supplied from the charging system 1 to the vehicle 42, and the battery (not illustrated) of the vehicle 42 is charged. As described above, by mounting the charging system 1 on the ceiling 210 of the parking lot 200, the charging system 1 can be easily installed in the existing parking lot 200.

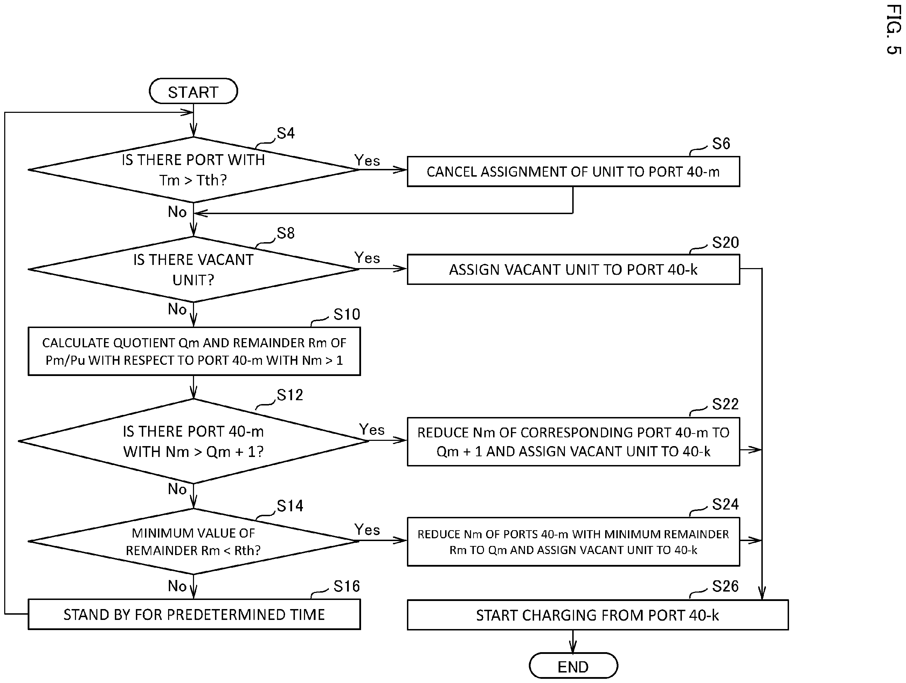

FIG. 5 is a flowchart of a unit assignment routine.

The control device 50 starts this routine when the vehicle 42 is newly connected to any charging port 40. In the following description, "m" and "k" are the port numbers of the charging ports 40 and are any of "1" to "4" in the example illustrated in FIG. 1. In particular, the port number k is the port number of a charging port 40-k to which the vehicle 42 is newly connected.

When the process proceeds to step S4 in FIG. 5, the charging time monitoring section 52 determines whether there is a charging port 40-m whose charging time Tm has exceeded a predetermined time Tth. Here, the predetermined time Tth is, for example, the upper limit time of charging. If it is determined as "Yes" in step S4, the process proceeds to step S6, and the unit assignment section 54 cancels the assignment of the cell converter unit 22 to the charging port 40-m. If it is determined as "No" in step S4 or when the processing in step S6 is ended, the process proceeds to step S8.

In step S8, the unit assignment section 54 determines whether or not there is a vacant unit, that is, a unit not used for charging in the cell converter unit 22. If it is determined as "Yes" in step S8, the process proceeds to step S20. Here, the unit assignment section 54 assigns a vacant unit to the charging port 40-k, that is, the charging port to which the vehicle 42-k is newly connected. Next, when the process proceeds to step S26, charging from the charging port 40-k to the newly connected vehicle 42-k is started, and the processing of this routine ends.

On the other hand, when there is no vacant unit, "No" is determined in step S8, and the process proceeds to step S10. In the following description, the number of cell converter units 22 assigned to the charging port 40-m is referred to as the number of assigned units Nm. In addition, the power supplied from the charging port 40-m to the vehicle 42-m is referred to as supply power Pm. The rated power that can be output from one cell converter unit 22 is referred to as unit rated power Pu.

In step S10, the unit assignment section 54 performs integer division of the supply power Pm/the unit rated power Pu for the charging port 40-m with the number of assigned units Nm which is plural and calculates a quotient Qm and a remainder Rm. Next, when the process proceeds to step S12, the unit assignment section 54 determines whether there is the charging port 40-m satisfying "Nm > Qm + 1". That is, it is determined whether or not there is the charging port 40-m with the number of assigned units Nm larger than necessary.

The reason why the number of assigned units Nm can increase more than necessary is that the charging current that can be supplied to the vehicle 42 decreases as the charging rate of the battery provided in the vehicle 42 increases. That is, even if the number of assigned units Nm is a necessary and sufficient number at the start of charging, the number of assigned units Nm can become a number larger than necessary as the charging time elapses. If it is determined as "Yes" in step S10, the process proceeds to step S22.

In step S22, the unit assignment section 54 reduces the number of assigned units Nm of the charging port 40-m to "Qm + 1". Even if the number of assigned units Nm is reduced in this way, the previous supply power Pm can be maintained. Further, the unit assignment section 54 assigns a vacant unit that has occurred as a result of reducing the number of assigned units Nm to the charging port 42-k to which the vehicle 40-k is newly connected.

In contrast, if it is determined as "No" in step S12, the process proceeds to step S14. Here, the unit assignment section 54 determines whether or not the minimum value of the remainder Rm is smaller than a predetermined value Rth. The predetermined value Rth is, for example, 1/2 of the unit rated power Pu. Here, if it is determined as "Yes", the process proceeds to step S24. In step S24, the unit assignment section 54 reduces the number of assigned units Nm of the charging port 40-m having the minimum remainder Rm to the quotient Qm. Further, the unit assignment section 54 assigns the vacant unit that has occurred as a result to the charging port 40-k to which the vehicle 42-k is newly connected.

When the processing in step S22 or S24 described above ends, the process proceeds to step S26. Here, as described above, charging from the charging port 40-k to the newly connected vehicle 42-k is started, and the processing of this routine ends. In contrast, if it is determined as "No" in step S14, the process proceeds to step S16, and the process stands by for a predetermined time. Thereafter, the process returns to step S4, and processing similar to that described above is repeated.

Here, the significance of steps S14 and S24 will be described with a specific example. As an example, it is assumed that the unit rated power Pu is 50 [kW], the supply power Pm is 210 [kW] at a certain charging port 40-m, and the number of assigned units Nm is "5". In this case, the quotient Qm obtained in step S10 becomes "4", and the remainder Rm becomes "10 [kW]".

It is assumed that remainder Rm = 10 [kW] is the minimum value among the remainders R1 to R4 at all the charging ports 40-1 to 40-4 and is smaller than the predetermined value Rth. Then, in step S24, the number of assigned units Nm, which is originally "5", is reduced to quotient Qm = 4. The maximum supply power Pm that can be achieved with number of assigned units Nm = 4 is 4×50 [kW] =200 [kW]. Therefore, the supply power Pm, which is originally 210 [kW], is reduced by remainder Rm=10 [kW] to be 200 [kW].

When the supply power Pm of the charging port 40-m is reduced, the charging time at the charging port 40-m becomes longer. However, in a case where the remainder Rm, that is, the power to be reduced is small, the influence can be suppressed to be relatively small. Therefore, in steps S14 and S24 described above, the number of assigned units Nm is reduced with respect to the charging port 40-m having the minimum remainder Rm.

### [Effects of Embodiment]

As described above, according to the above-described embodiment, the charging system 1 includes the plurality of power conversion units (22), the plurality of charging ports 40 that respectively supply power to the plurality of apparatuses to be charged (42), the switch section (30) that switches the connection relationship between the plurality of power conversion units (22) and the plurality of charging ports 40, the unit assignment section 54 that assigns the power conversion units (22) to each of the apparatuses to be charged (42-m) by the number of assigned units Nm which is one or plural, and the switching control section 56 that sets the connection relationship in the switch section (30) according to the assignment result by the unit assignment section 54. When a new apparatus to be charged (42-k) is connected to any (40-k) of charging ports, a unit assignment section 54 is configured to reduce the number of assigned units Nm preferentially for one, from among apparatuses to be charged (42-m) for which the number of assigned units Nm is plural, that involves a smaller reduction in charging power when the number of assigned units Nm is reduced, and to assign the power conversion unit (22) in a vacant state resulting from the reduction to the newly connected apparatus to be charged (42-k). As a result, since the number of assigned units Nm can be reduced preferentially with respect to a device with a small decrease in charging power (minimum in the embodiment), the power conversion units (22) can be appropriately assigned to all the apparatuses to be charged (42) while suppressing the influence on the apparatuses to be charged (42-m) which have already been charged.

More preferably, the plurality of power conversion units (22) are connected in series to the AC power supply (16), and each of the power conversion units converts the input AC voltage into a DC voltage and outputs the DC voltage. As a result, power can be directly received from the high-voltage AC system 16.

Further, it is more preferable that the unit assignment section 54 further has a function of canceling the assignment of the power conversion unit (22) to the corresponding charging port 40 in a case where there is an apparatus (42) to be charged whose charging time Tm exceeds the predetermined time Tth. As a result, the power conversion unit (22) can be more effectively used.

Further, it is more preferable that the charging system 1 further includes the housing 106 mounted on the ceiling 210 of the parking lot 200. As a result, the charging system 1 can be easily installed in the existing parking lot 200.

### [Modification]

In addition, the present invention is not limited to the above-described embodiment and includes various modifications. The above-described embodiment has been described in detail for easy understanding of the present invention, and is not necessarily limited to one having all the configurations described above. In addition, another configuration may be added to the configuration of the above embodiment, and a part of the configuration may be replaced with another configuration. In addition, the control lines and the information lines shown in the accompanying drawings indicate what is considered to be necessary for the description, and do not indicate all the control lines and the information lines required in terms of products. In practice, it may be considered that almost all the configurations are connected to each other. Possible modifications to the above embodiment are, for example, as follows.

(1) In the above embodiment, the example in which the vehicle 42 is applied as an example of the apparatus to be charged has been described, but the apparatus to be charged is not limited to the vehicle 42 and may be a moving object such as a ship or a flying object provided with a battery, or an electric device.
(2) In the above embodiment, the charging system 1 receives power from the AC system 16. However, in recent years, since a DC power system is also becoming widespread, the charging system 1 may be connected to a DC power supply such as a DC power system instead of the AC system 16. In this case, the AC/DC converter 71 and the smoothing capacitor 72 illustrated in FIG. 2 can be omitted in the cell converter unit 22.
(3) Since the hardware of the control device 50 in the above embodiment can be implemented by a general computer, the flowchart illustrated in FIG. 5, programs for executing various processes described above, and the like may be stored in a storage medium or distributed via a transmission path.
(4) The processing illustrated in FIG. 5 and each processing described above are described as software processing using a program in the above embodiment, but a part or all of the processing may be replaced with hardware processing using an application specific integrated circuit (ASIC; Application Specific IC), a field programmable gate array (FPGA), or the like.
(5) Various types of processes executed in the above embodiment may be executed by a server computer via a network (not illustrated), and various types of data stored in the above embodiment may also be stored in the server computer.

### Reference Signs List

1 charging system
16 AC system (AC power supply)
22 cell converter unit (power conversion unit)
30 matrix switch section (switch section)
40 charging port
42 vehicle (apparatus to be charged)
50 control device (charging system control device)
54 unit assignment section
56 switching control section
106 housing
200 parking lot
210 ceiling
Nm number of assigned units
Tm charging time
Tth predetermined time

## Claims

1. A charging system comprising:
a plurality of power conversion units;
a plurality of charging ports that respectively supply power to a plurality of apparatuses to be charged;
a switch section that switches a connection relationship between the plurality of power conversion units and the plurality of charging ports;
a unit assignment section that assigns the power conversion units to each of the apparatuses to be charged by the number of assigned units which is one or plural; and
a switching control section that sets a connection relationship in the switch section according to an assignment result by the unit assignment section,
wherein the unit assignment section is configured to, when the new apparatus to be charged is connected to any of charging ports, reduce the number of assigned units preferentially for one, from among apparatuses to be charged for which the number of assigned units is plural, that involves a smaller reduction in charging power when the number of assigned units is reduced, and to assign the power conversion unit in a vacant state resulting from the reduction to the newly connected apparatus to be charged.

2. The charging system according to claim 1, wherein the plurality of power conversion units are connected in series to an AC power supply, and each of the power conversion units converts an input AC voltage into a DC voltage and outputs the DC voltage.

3. The charging system according to claim 2, wherein the unit assignment section further has a function of canceling an assignment of the power conversion unit to the corresponding charging port in a case where there is the apparatus to be charged whose charging time exceeds a predetermined time.

4. The charging system according to claim 3, further comprising a housing mounted on a ceiling of a parking lot.

5. A charging system control device applied to a charging system including a plurality of power conversion units, a plurality of charging ports that respectively supply power to a plurality of apparatuses to be charged, and a switch section that switches a connection relationship between the plurality of power conversion units and the plurality of charging ports, comprising:
a unit assignment section that assigns the power conversion units to each of the apparatuses to be charged by the number of assigned units which is plural; and
a switching control section that sets a connection relationship in the switch section according to an assignment result by the unit assignment section.
